# EUROPÄISCHE PATENTSCHRIFT

(11) **EP 2 602 553 B1**
(45) Veröffentlichungstag und Bekanntmachung des Hinweises auf die Patenterteilung: **10.10.2018**
(21) Anmeldenummer: 12194522.4
(22) Anmeldetag: 28.11.2012
(51) Int. Cl.: F24C 15/00, F24C 15/04, G02B 6/00, F25D 27/00, F21V 8/00

(54) **Haushaltsgerätetür mit Beleuchtungseinrichtung**
Domestic appliance door with a lighting device
Porte d'appareil ménager avec dispositif d'éclairage

(30) Priorität: 06.12.2011 DE 102011087811
(43) Veröffentlichungstag der Anmeldung: 12.06.2013
(73) Patentinhaber: BSH Hausgeräte GmbH, 81739 München (DE)
(72) Erfinder: Bleier, Konrad, 76599 Weisenbach (DE); Brunner, Martin, 75177 Pforzheim (DE); Frey, Sebastian, 75443 Ötisheim (DE); Hintermayer, Manfred, 76185 Karlsruhe (DE)

(56) Entgegenhaltungen:
- EP-A1- 2 119 968
- WO-A1-99/22174
- DE-A1- 10 347 763
- DE-A1-102005 045 367
- DE-A1-102007 015 237
- FR-A1- 2 944 093
- US-A1- 2009 316 385

## Beschreibung

Die Erfindung betrifft eine Haushaltsgerätetür zum Verschließen einer Beschickungsöffnung eines Aufnahmeraums eines Haushaltsgeräts, wobei die Haushaltsgerätetür mindestens eine Beleuchtungseinrichtung mit mindestens einer Lichtquelle zum Beleuchten des Aufnahmeraums aufweist. Die Erfindung betrifft ferner ein Haushaltsgerät mit einer solchen Haushaltsgerätetür.

EP 1 995 522 B1 offenbart einen Ofen, innerhalb dessen Ofentür Beleuchtungsmittel zum Beleuchten eines durch die Ofentür verschließbaren Ofenraums vorhanden sind. Diese Beleuchtungsmittel weisen mehrere Lichtquellen auf, welche ihr Licht direkt fokussiert in Richtung des Ofenraums strahlen. Die Lichtquellen können in Reihe angeordnete, ihr Licht jeweils in den Ofenraum richtende Leuchtdioden sein. Dazu ist gezeigt, die Leuchtdioden an einem linken und an einem rechten Bereich der Ofentür jeweils auf einem Blechträger zu befestigen, wobei eine Ausrichtung der Leuchtdioden mittels einer entsprechenden lokalen Ausrichtung des Blechträgers erreicht wird. Die Ofentür kann mittels natürlicher Ventilation gekühlt werden. Jedoch ist die Ofentür vergleichsweise aufwändig aufgebaut. Auch sind die Leuchtdioden gegenüber hohen Temperaturen, wie sie z.B. bei einem Pyrolysebetrieb auftreten, nur unzureichend geschützt.

DE 10 2005 045 367 A1 offenbart eine Innenraumbeleuchtungsvorrichtung für ein Gargerät mit einer Beleuchtungseinheit zum Einstrahlen von Beleuchtungslicht in einen Innenraum des Gargeräts. Um eine Innenraumbeleuchtungsvorrichtung für ein Gargerät bereitzustellen, die besonders kostengünstig herstellbar ist und die zudem stromsparend mit einer ungefährlichen niedervoltigen Stromversorgung betrieben werden kann, wird vorgeschlagen, dass die Beleuchtungseinheit zumindest eine Leuchtdiode umfasst.

US 2009/0316385 A1 offenbart eine Ofenbeleuchtungseinrichtung, die eine LED-Anordnung oder Anordnungen enthält, welche optisch mit einem Lichtleiter gekoppelt sind. Die Beleuchtungseinrichtung umfasst auch eine Halterung und ein Paar von elektrischen Leitungsdrähten, um die LED-Beleuchtungseinrichtung mit einer externen Spannungsquelle zu verbinden. Die LED-Beleuchtungseinrichtung weist eine LED auf, die auf einer Leiterplatte befestigt ist, die auch eine Treiberschaltung zur Versorgung der LED und einen Kühlkörper zum Abführen von Wärme von der LED aufweist. Die Halterung ist an einer Tür des Backofens befestigbar, um die LED-Beleuchtungseinrichtung neben einem Streiflichtfenster zu halten. Die Halterung weist einen Schlitz benachbart zu dem Fenster auf, um Licht von der LED durch den Lichtleiter und in den Ofenraum zu strahlen. Eine Positionierung der Beleuchtungseinrichtung außerhalb des Ofenraums und benachbart zu dem Streiflichtfenster ermöglicht es der LED, innerhalb gewünschter Temperaturgrenzen zu arbeiten.

DE 103 47 763 A1 offenbart eine Haushaltsgeräteeinheit mit einem zumindest teilweise aus einem transparenten Material gefertigten Bauteil, insbesondere einer Türscheibe, und mit einem optischen Funktionsmittel. Es wird vorgeschlagen, dass das optische Funktionsmittel zumindest teilweise von einem im Inneren des transparenten Material angeordneten Lichtstreubereich gebildet ist.

Es ist die **Aufgabe** der vorliegenden Erfindung, die Nachteile des Standes der Technik zumindest teilweise zu überwinden und insbesondere eine mit mindestens einem Beleuchtungsmittel ausgerüstete, einfach aufgebaute Haushaltstür bereitzustellen, welche den Aufnahmeraum gleichmäßiger ausleuchtet.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Haushaltsgerätetür zum Verschließen einer Beschickungsöffnung eines Aufnahmeraums eines Haushaltsgeräts, wobei die Haushaltsgerätetür mindestens eine Beleuchtungseinrichtung mit mindestens einer Lichtquelle zum Beleuchten des Aufnahmeraums aufweist. Die Beleuchtungseinrichtung weist mindestens einen Lichtleiter aus lichtdurchlässigem Material auf, in welchen Licht mindestens einer und einen Kühlkörper zum Abführen von Wärme von der LED aufweist. Die Halterung ist an einer Tür des Backofens befestigbar, um die LED-Beleuchtungseinrichtung neben einem Streiflichtfenster zu halten. Die Halterung weist einen Schlitz benachbart zu dem Fenster auf, um Licht von der LED durch den Lichtleiter und in den Ofenraum zu strahlen. Eine Positionierung der Beleuchtungseinrichtung außerhalb des Ofenraums und benachbart zu dem Streiflichtfenster ermöglicht es der LED, innerhalb gewünschter Temperaturgrenzen zu arbeiten.

DE 103 47 763 A1 offenbart eine Haushaltsgeräteeinheit mit einem zumindest teilweise aus einem transparenten Material gefertigten Bauteil, insbesondere einer Türscheibe, und mit einem optischen Funktionsmittel. Es wird vorgeschlagen, dass das optische Funktionsmittel zumindest teilweise von einem im Inneren des transparenten Material angeordneten Lichtstreubereich gebildet ist.

Es ist die **Aufgabe** der vorliegenden Erfindung, die Nachteile des Standes der Technik zumindest teilweise zu überwinden und insbesondere eine mit mindestens einem Beleuchtungsmittel ausgerüstete, einfach aufgebaute Haushaltstür bereitzustellen, welche den Aufnahmeraum gleichmäßiger ausleuchtet.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Haushaltsgerätetür zum Verschließen einer Beschickungsöffnung eines Aufnahmeraums eines Haushaltsgeräts, wobei die Haushaltsgerätetür mindestens eine Beleuchtungseinrichtung mit mindestens einer Lichtquelle zum Beleuchten des Aufnahmeraums aufweist. Die Beleuchtungseinrichtung weist mindestens einen Lichtleiter aus lichtdurchlässigem Material auf, in welchen Licht mindestens einer Lichtquelle einkoppelbar ist und welcher dazu angeordnet und eingerichtet ist, ihn in eingekoppeltes Licht in den Aufnahmeraum einzustrahlen. Dem mindestens einen Lichtleiter ist mindestens eine Reflexionslage zugeordnet, um von diesem Lichtleiter einfallendes Licht in den Aufnahmeraum zu reflektieren. Diese Anordnung weist den Vorteil auf, dass aufgrund der Verwendung des Lichtleiters aus lichtdurchlässigem Material auf komplexe Lichtführungsstrukturen wie hohle, innen verspiegelte Lichtkanäle verzichtet werden kann. Zudem lässt sich auf eine einfache Weise eine besonders gleichmäßige und großwinklige Beleuchtung des Aufnahmeraums erreichen. Diese Anordnung weist den weiteren Vorteil auf, dass die Haushaltsgerätetür nicht mit einem dedizierten Reflektorelement (z.B. einem Reflektorblech) ausgerüstet zu werden braucht, sondern die mindestens eine Reflexionslage auf bestehende Bauelemente aufgebracht werden kann. Durch die Reflexionslage wird ansonsten verloren gegangenes Licht in den Aufnahmeraum reflektiert, was diesen stärker und zudem gleichmäßiger ausleuchten kann.

Der Lichtleiter kann insbesondere ein Lichtleiter sein, welcher Licht innerhalb seines Materials oder Körpers leiten kann. Der Lichtleiter ist insbesondere ein Körper, welcher das Licht mittels innerer Totalreflexion leiten kann (TIR-Körper). Der Lichtleiter ist insbesondere ein Vollkörper.

Es ist die mindestens eine Reflexionslage auf einer weiter als der mindestens eine Lichtleiter von dem Aufnahmeraum entfernten Durchsichtscheibe aufgebracht. Dies ermöglicht eine besonders einfache Aufbringung der Reflexionslage.

Erfindungsgemäß ist mindestens eine Reflexionslage auf der dem Lichtleiter abgewandten Seite der Scheibe angebracht, was eine Anordnung der Reflexionslage in einen kühleren Bereich der Haushaltsgerätetür ermöglicht.

Es ist noch eine Ausgestaltung, dass der mindestens eine Lichtleiter zwischen einer Innenscheibe und einer dazu benachbarten Scheibe angeordnet ist und mindestens eine Reflexionslage auf dieser benachbarten Scheibe angeordnet ist. Dadurch kann ein Abstand zwischen dem Lichtleiter und der Reflexionslage klein gehalten werden und zudem eine Lichtausbeute erhöht werden.

Es ist eine Weiterbildung, dass mindestens eine Reflexionslage auf der dem Lichtleiter zugewandten Seite der Scheibe angebracht ist, was einen besonders geringen Abstand ermöglicht.

Es ist auch eine Weiterbildung, dass mindestens eine Reflexionslage auf einer Zwischenscheibe angebracht ist, alternativ auf einer Frontscheibe.

Es ist eine alternative oder zusätzliche Ausgestaltung, dass mindestens eine Reflexionslage auf einem Hitzeschild aufgebracht ist. Dadurch kann ein Durchsichtbereich durch die Scheibe(n) besonders groß gehalten werden.

Es ist ferner eine Ausgestaltung, dass mindestens eine Reflexionslage diffus reflektierend ist. So kann eine besonders gleichmäßige Reflexion und damit Ausleuchtung des Aufnahmeraums erreicht werden. Alternativ kann die Reflexionslage aber auch spekular reflektierend ausgestaltet sein.

Es ist außerdem eine Ausgestaltung, dass mindestens eine Reflexionslage eine weiße oder weißliche Farbe aufweist. Diese ermöglicht eine diffuse Reflexion über einen besonders breiten Spektralbereich und damit einen hohen Wirkungsgrad.

Es ist noch eine weitere Ausgestaltung, dass mindestens eine Reflexionslage keramische Farbe aufweist. Keramische Farbe ist besonders hochtemperaturstabil.

Es ist darüber hinaus eine Ausgestaltung, dass mindestens eine Reflexionslage aufgedruckt ist. Diese Art der Auftragung ist besonders preiswert und kann z.B. mittels eines Siebdrucks, Rakelns usw. durchgeführt werden.

Es ist darüber hinaus eine Ausgestaltung, dass mindestens eine Reflexionslage aufgesprüht ist. Dies ermöglicht eine besonders dichte Reflexionslage mit geringen oder keinen Zusatzstoffen.

Es ist ferner eine Weiterbildung, dass sich mindestens eine Reflexionslage (von Sicht des Aufnahmeraums aus) hinter dem zugeordneten Lichtleiter erstreckt und sich insbesondere seitlich darüber hinaus erstreckt.

Es ist auch eine Weiterbildung, dass sich mindestens eine Reflexionslage über im Wesentlichen die gesamte Länge des Lichtleiters zumindest in einem Sichtbereich der Haushaltsgerätetür erstreckt. Dadurch ist ein hoher Lichtanteil in den Aufnahmeraum rückstrahlbar.

Die Reflexionslage kann insbesondere als eine Reflexionsschicht ausgebildet sein.

Die Reflexionslage kann einlagig oder mehrlagig sein.

Es ist noch eine weitere Ausgestaltung, dass der Lichtleiter aus einem glasartigen Material (Glas, Glaskeramik o.ä.) oder aus Kunststoff besteht. Glas weist den Vorteil einer hohen Temperaturbeständigkeit auf. Das Glas ist bevorzugt Borosilikat-Glas. Eine optische Eigenschaft kann einfach und präzise durch Zusatz von Füllstoffen geändert werden. So mag der Lichtleiter als ein diffus streuender Lichtleiter ausgestaltet sein. Darüber hinaus ist glasartiges Material vergleichsweise preiswert, vielseitig formbar und seine Oberfläche einfach nachbehandelbar.

Alternativ mag der Lichtleiter aus Kunststoff bestehen, was eine Herstellung weiter vereinfacht. Der Kunststoff ist vorzugsweise ein hochgradig temperaturfester Kunststoff. Der Kunststoff besteht vorzugsweise aus Polycarbonat (PC), Acrylnitril-Butadien-Styrol (ABS) und/oder Polymethylmethacrylat (PMMA). Ein Lichtleiter aus Kunststoff ist besonders einfach und preiswert herstellbar.

Es ist noch eine Ausgestaltung, dass die Haushaltsgerätetür mindestens einen Kaltbereich aufweist, welcher dazu vorgesehen ist, in einem geschlossenen Zustand der Haushaltsgerätetür seitlich, insbesondere unterhalb, der Beschickungsöffnung angeordnet zu sein, und sich die mindestens eine Lichtquelle innerhalb des Kaltbereichs befindet.

Unter einem Kaltbereich kann folglich insbesondere ein Bereich der Haushaltsgerätetür verstanden werden, welcher in dem geschlossenen Zustand der Haushaltsgerätetür diese nicht überdeckt.

Durch die Anordnung der mindestens einen Lichtquelle in dem Kaltbereich lässt sich diese auch bei hohen Temperaturen in dem Aufnahmeraum auf einem niedrigen thermischen Niveau halten. Insbesondere ist die Lichtquelle keiner direkten Wärmestrahlung ausgesetzt. Folglich lässt sich eine besonders hohe Lebensdauer der Beleuchtungseinrichtung erreichen, und zwar auch, falls ein zugehöriges Haushaltsgerät pyrolysefähig ist.

Allgemein kann der Kaltbereich insbesondere derjenige Kaltbereich sein, der sich an derjenigen Seite der Haushaltsgerätetür befindet, an welcher diese verschwenkbar ist oder mindestens ein Türscharnier aufweist. Ein solcher Kaltbereich ist vergleichsweise groß, so dass ein ausreichender, nicht gedrängter Bauraum zur Unterbringung der mindestens einen Lichtquelle zur Verfügung steht.

Es ist eine Ausgestaltung, dass der Kaltbereich ein unterer Kaltbereich ist. Unter einem unteren Kaltbereich kann insbesondere ein Kaltbereich verstanden werden, der in dem geschlossenen Zustand der Haushaltsgerätetür unterhalb der Beschickungsöffnung angeordnet ist. Ein solcher Kaltbereich steht insbesondere bei nach unten öffnenden Türen wie Backofentüren zur Verfügung.

Alternativ kann der Kaltbereich, insbesondere bei einer sich seitlich öffnenden oder seitlich verschwenkbaren Haushaltsgerätetür, ein seitlicher Kaltbereich sein (z.B. für Kühlschränke oder Mikrowellenöfen) oder insbesondere bei einer sich nach oben öffnenden oder oberseitig verschwenkbaren Haushaltsgerätetür ein oberer Kaltbereich sein (z.B. bei einem Hocheinbaugerät).

Es ist noch eine Ausgestaltung, dass die mindestens eine Lichtquelle in einem Teilbereich des unteren Kaltbereichs angeordnet ist, welcher sich bis zu 100 mm von einer unteren Türkante und/oder bis zu 150 mm von seitlichen Türprofilen erstreckt.

Es ist noch eine weitere Ausgestaltung, dass die mindestens eine Lichtquelle mindestens eine Halbleiterlichtquelle umfasst. Eine Halbleiterlichtquelle ist besonders langlebig, baulich kompakt und kann einen hohen Lichtstrom erzeugen.

Bevorzugterweise umfasst die mindestens eine Halbleiterlichtquelle mindestens eine Leuchtdiode. Bei Vorliegen mehrerer Leuchtdioden können diese in der gleichen Farbe oder in verschiedenen Farben leuchten. Eine Farbe kann monochrom (z.B. rot, grün, blau usw.) oder multichrom (z.B. weiß) sein. Mehrere Leuchtdioden können ein Mischlicht erzeugen; z.B. ein weißes Mischlicht. Die mindestens eine Leuchtdiode kann mindestens einen wellenlängenumwandelnden Leuchtstoff enthalten (Konversions-LED). Der Leuchtstoff kann alternativ oder zusätzlich entfernt von der Leuchtdiode angeordnet sein ("Remote Phosphor"). Die mindestens eine Leuchtdiode kann in Form mindestens einer einzeln gehäusten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AllnGaP, sind allgemein auch organische LEDs (OLEDs, z.B. Polymer-OLEDs) einsetzbar. Alternativ kann die mindestens eine Halbleiterlichtquelle z.B. mindestens einen Diodenlaser aufweisen.

Die Haushaltsgerätetür kann zur Stromversorgung der mindestens einen Lichtquelle mindestens eine elektrische Verbindung zu dem zugehörigen (restlichen) Haushaltsgerät aufweisen. Bei einer Verwendung mindestens einer Leuchtdiode kann ein zugehöriger Treiber in der Haushaltsgerätetür, insbesondere in dem Kaltbereich, vorhanden sein oder alternativ in dem (restlichen) Haushaltsgerät.

Es ist ferner eine Ausgestaltung, dass die Haushaltsgerätetür zwangsbelüftbar ist. Dadurch wird eine Temperatur in der Haushaltsgerätetür weiter gesenkt, was eine Lebensdauer ihrer Komponenten verlängert und eine Nutzersicherheit vor hohen Temperaturen verbessert. Es ist eine Weiterbildung, dass zumindest der Kaltbereich zwangsbelüftbar ist. So können die Abwärme erzeugenden Lichtquellen besonders effektiv gekühlt werden.

Es ist außerdem eine Ausgestaltung, dass die mindestens eine Lichtquelle mit mindestens einem Kühlkörper thermisch leitend verbunden ist. Dies verbessert eine Wärmeableitung und Kühlung der Lichtquelle und damit deren Lebensdauer. Der Kühlkörper kann für eine kompakte Bauform und einfache Montage gleichzeitig einen Halter für die Leuchtdiode darstellen.

Es ist auch eine Ausgestaltung, dass der Kaltbereich von einem die Beschickungsöffnung in einem geschlossenen Zustand der Haushaltsgerätetür überdeckenden Warmbereich mittels einer Abtrennung abgetrennt ist und die Abtrennung mindestens eine Lichtdurchleitöffnung zum Durchleiten von mittels der mindestens einen Lichtquelle erzeugten Lichts aufweist. Dies erleichtert eine Lichtführung zwischen Kaltbereich und Warmbereich. Die Abtrennung kann zumindest teilweise luftdurchlässig sein, um einen kühlenden Luftstrom zwischen Scheiben der Haushaltsgerätetür zu erlauben.

Es ist eine weitere Ausgestaltung, dass der mindestens eine Lichtleiter in eine Scheibe der Haushaltsgerätetür integriert ist. So können Teile eingespart werden und zudem ein Bauraum verkleinert werden. Darüber hinaus wird so eine erhöhte Beleuchtungseffizienz im Vergleich zu einem hinter dieser Scheibe angeordneten Lichtleiter durch eine Vermeidung von Oberflächenreflexionen ermöglicht. Diese Scheibe kann für eine gute Wärmeabschirmung der Frontscheibe insbesondere eine Zwischenscheibe sein, da die Zwischenscheibe(n) dann ebenfalls ausreichend dick ausgestaltet sein kann bzw. können. Alternativ kann mindestens ein Lichtleiter auch zwischen zwei Zwischenscheiben angeordnet sein, wobei die Zwischenscheiben dann ggf. dünner ausgestaltet sind, um ihren Bauraum nicht zu vergrößern.

Es ist noch eine weitere Ausgestaltung, dass zumindest ein Lichtleiter sich zumindest über eine Höhe der Beschickungsöffnung erstreckt. So kann der Aufnahmeraum über seine ganze Höhe ausgeleuchtet werden, uns zwar auch dann, wenn mindestens eine Einschubebene o.ä. belegt ist. Der Lichtleiter ist bevorzugt senkrecht ausgerichtet.

Es können grundsätzlich ein, zwei oder noch mehr Lichtleiter vorgesehen sein. Mindestens ein Lichtleiter kann zur Beleuchtung von mehreren (insbesondere allen) Einschubebenen des Aufnahmeraums eingerichtet und angeordnet sein, insbesondere ein senkrecht stehender Lichtleiter.

Ein Lichtleiter kann insbesondere senkrecht oder horizontal angeordnet sein. Eine senkrechte Anordnung ermöglicht eine Beleuchtung über die Höhe des Aufnahmeraums, insbesondere über mehrere Einschubebenen. Ein senkrecht stehender Lichtleiter verläuft bevorzugt parallel zu einem Türprofil der Haushaltsgerätetür. Zur Bereitstellung eines möglichst großen Durchsichtbereichs kann mindestens ein senkrecht angeordneter Lichtleiter insbesondere in einem Bereich eines linken Rands (linksseitig angeordneter Lichtleiter) und/oder eines rechten Rands (rechtsseitig angeordneter Lichtleiter) eines Sichtfensters der Haushaltsgerätetür angeordnet sein.

Insbesondere mögen zur Beleuchtung einer Einschubebene zwei Lichtleiter vorgesehen sein. Durch die Verwendung zweier Lichtleiter lässt sich eine Schattenbildung in dem Aufnahmeraum reduzieren. Ein linksseitig angeordneter Lichtleiter und ein rechtsseitig angeordneter Lichtleiter können insbesondere spiegelsymmetrisch zu einer Türmittelachse ausgebildet und/oder angeordnet sein, um eine gleichmäßige Ausleuchtung des Aufnahmeraums zu unterstützen.

Alternativ mag mindestens ein Lichtleiter zur Beleuchtung jeweils nur einer Einschubebene eingerichtet und angeordnet sein. Dazu kann der Lichtleiter insbesondere horizontal angeordnet sein, um eine gleichmäßige Ausleuchtung über die Breite des Aufnahmeraums zu ermöglichen. Zur Bereitstellung eines möglichst großen Durchsichtbereichs kann ein horizontal angeordneter Lichtleiter insbesondere in einem Bereich eines oberen Rands und/oder eines unteren Rands eines Sichtfensters der Haushaltsgerätetür angeordnet sein.

Es ist auch eine Ausgestaltung, dass zumindest ein Lichtleiter ein benachbartes Türprofil zumindest bereichsweise thermisch abschirmt. Der Lichtleiter kann also insbesondere zwischen dem Aufnahmeraum und dem Türprofil angeordnet sein. Dadurch kann eine Erwärmung des Türprofils verringert werden, was insbesondere für Türprofile aus Kunststoff vorteilhaft ist. Ein solcher Lichtleiter kann insbesondere ein senkrecht stehender Lichtleiter sein, der sich insbesondere über die Höhe der Beschickungsöffnung erstrecken kann.

Es ist noch eine Weiterbildung, dass eine Dicke zumindest eines Lichtleiters vorzugsweise zwischen 5 mm und 30 mm beträgt. Die Dicke ist jedoch nicht darauf beschränkt.

Es ist auch eine Weiterbildung, dass ein Querschnittsprofil zumindest eines Lichtleiters zumindest abschnittsweise gekrümmt ist und insbesondere kreiszylindrisch, kreissegmentförmig oder oval ausgebildet sein kann. Für eine breite Lichtabstrahlung ist bevorzugt ein gekrümmter oder ein stärker gekrümmter Bereich einer Mantelfläche des Lichtleiters dem Aufnahmeraum zugewandt. Jedoch ist das Querschnittsprofil nicht darauf beschränkt, sondern kann z.B. auch eckig und/oder freigeformt sein.

Der Lichtleiter ist bevorzugt geradlinig ausgebildet, kann grundsätzlich aber auch gekrümmt sein.

Es ist ferner eine Ausgestaltung, dass der Lichtleiter mindestens einen Oberflächenbereich aufweist, an dem ein Lichtaustritt verhindert oder unterdrückt wird, und mindestens einen (insbesondere dazu komplementären) Oberflächenbereich aufweist, welcher für eine Lichtausstrahlung vorgesehen ist, wobei der für eine Lichtausstrahlung vorgesehene mindestens eine Oberflächenbereich im Wesentlichen in den Aufnahmeraum gerichtet ist. Dadurch wird auf eine kompakte Weise eine gezielte Beleuchtung des Aufnahmeraums erleichtert.

Es ist noch eine Ausgestaltung, dass sich mindestens ein Lichtleiter durch eine Lichtdurchleitöffnung erstreckt. Dadurch können dem Lichtleiter vorgelagerte Elemente im Kaltbereich untergebracht werden, wo sie thermisch geschützt sind.

Es ist eine weitere Ausgestaltung, dass dem Lichtleiter ein Zwischenstück vorgeschaltet ist, in welches Licht mindestens einer Lichtquelle einkoppelbar ist und welches das eingekoppelte Licht an den Lichtleiter weiterleitet. Das Zwischenstück ermöglicht eine effektive Lichteinkopplung von der mindestens einen Lichtquelle und folglich eine hohe Lichtausbeute. Das Zwischenstück ist bevorzugt im Kaltbereich untergebracht.

Es ist auch eine Ausgestaltung, dass das Zwischenstück ein optisches Element ist oder aufweist. Dadurch kann eine besonders vielseitige Strahlführung erreicht werden, insbesondere für eine hohe Lichtausbeute.

Es ist auch noch eine Ausgestaltung, dass das Zwischenstück aus Kunststoff besteht und der Lichtleiter aus Glas besteht. So wird eine preiswerte und vielseitige Lichtankopplung und Lichtweiterleitung bereitgestellt. Das Zwischenstück ist dazu bevorzugt in dem Kaltbereich untergebracht, insbesondere bei pyrolysefähigen Haushaltsgeräten. Das Zwischenstück und der Lichtleiter können alternativ z.B. beide aus dem gleichen Material bestehen, z.B. aus Glas oder Kunststoff, insbesondere einteilig ausgebildet. Dies vereinfacht eine Herstellung.

Es ist eine Weiterbildung, dass der Lichtleiter, das Zwischenstück und die mindestens eine zugehörige Leuchtdiode zueinander in Reihe oder kollinear angeordnet sind, was einen hohen fotometrischen Beleuchtungswirkungsgrad ermöglicht.

Es ist ferner eine Ausgestaltung, dass die Haushaltsgerätetür eine Gargerätetür, insbesondere Ofentür, ist. Das zugehörige Haushaltsgerät ist folglich ein Ofen, insbesondere Backofen, dessen Aufnahmeraum auch als ein Ofenraum oder (bei einem Backofen) als ein Backrohr bezeichnet werden kann. Insbesondere bei einem Ofen, insbesondere Backofen, kann eine Pyrolyse durchgeführt werden und wird aufgrund des vergleichsweise großen Aufnahmeraums (Ofenraums) eine effektive Beleuchtung benötigt.

Die Aufgabe wird auch gelöst durch ein Haushaltsgerät mit einem durch eine Beschickungsöffnung beschickbaren Aufnahmeraum, wobei die Beschickungsöffnung durch eine Haushaltsgerätetür verschließbar ist und die Haushaltsgerätetür mindestens einen Kaltbereich aufweist, welcher in einem geschlossenen Zustand der Haushaltsgerätetür seitlich, insbesondere unterhalb, der Beschickungsöffnung angeordnet ist, sowie mindestens eine Beleuchtungseinrichtung mit mindestens einer Lichtquelle zum Beleuchten des Aufnahmeraums aufweist, wobei sich die mindestens eine Halbleiterlichtquelle innerhalb des Kaltbereichs befindet.

Das Haushaltsgerät ergibt die gleichen Vorteile wie die Haushaltsgerätetür und ist auch analog ausgestaltbar.

Das Haushaltsgerät kann insbesondere in den Bereich der "weißen Ware" fallen und insbesondere zur Erledigung von Hausarbeit wie Kochen, Backen, Waschen, Reinigen usw. dienen. Das Haushaltsgerät kann ein Haushaltsgroßgerät sein (z.B. umfassend einen Kühlschrank, einen Gefrierschrank, eine Gefriertruhe, einen Elektroherd, eine Waschmaschine, eine Geschirrspülmaschine und einen Wäschetrockner) oder ein Haushaltskleingerät sein (z.B. umfassend ein Mikrowellengerät).

Das Haushaltsgerät kann insbesondere ein Küchengerät sein. Es ist besonders bevorzugt, dass das Haushaltsgerät ein Gargerät ist (z.B. umfassend einen Ofen und/oder einen Dampfgarer), insbesondere ein Backofen.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.1: zeigt als Explosionsdarstellung in einer Ansicht von schräg hinten eine Backofentür gemäß einem ersten Ausführungsbeispiel;
- Fig.2: zeigt in einer Ansicht von schräg hinten die Backofentür gemäß dem ersten Ausführungsbeispiel bei abgenommener rückwärtiger Scheibe;
- Fig.3: zeigt die Backofentür gemäß dem ersten Ausführungsbeispiel in einer Rückansicht;
- Fig.4: zeigt einen Ausschnitt die Backofentür gemäß dem ersten Ausführungsbei-spiel im Bereich einer Lichtquelle;
- Fig.5: zeigt einen Ausschnitt aus Fig.3 im Bereich der Lichtquelle;
- Fig.6: zeigt in einer Ansicht von schräg hinten einer Backofentür gemäß einem zweiten Ausführungsbeispiel bei abgenommener rückwärtiger Scheibe;
- Fig.7: zeigt einen mit der Backofentür gemäß dem ersten oder dem zweiten Aus-f ührungsbeispiel ausgerüsteten Backofen als Schnittdarstellung in Drauf-sicht mit einem zugehörigen Lichtabstrahlmuster; und
- Fig.8: zeigt in Seitenansicht noch einen weiteren möglichen Lichtleiter der Back-ofentür gemäß dem ersten oder dem zweiten Ausführungsbeispiel.

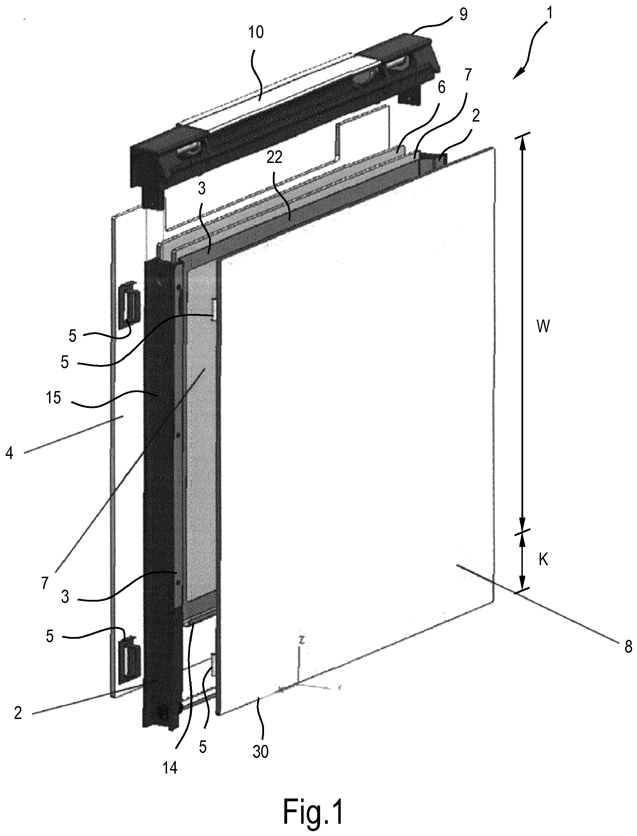

Fig.1 zeigt als Explosionsdarstellung in einer Ansicht von schräg hinten einen Grundaufbau einer Haushaltsgerätetür in Form einer Backofentür 1. Die Backofentür 1 weist zwei seitlich angeordnete Türprofile 2 auf, welche durch einen rechteckigen Rahmen 3 miteinander verbunden sind. Der Rahmen 3 stellt eine seitliche Begrenzung eines Sichtfensters dar.

An den Türprofilen 2 ist frontseitig eine Frontscheibe 4 aufgesetzt. Dazu kann die Frontscheibe mehrere auf die Frontscheibe 4 aufgeklebte Halterungen 5 aufweisen, in welche die Türprofile 2 eingreifen können. Zwischen den Türprofilen 2 kann optional mindestens eine Zwischenscheibe eingesetzt sein, hier beispielhaft zwei Zwischenscheiben 6, 7. Eine Rückseite der Backofentür 1 kann durch eine Innenscheibe 8 abgedeckt sein, welche z.B. ebenfalls durch daran aufgeklebte Halterungen 5 an den Türprofilen 2 befestigbar ist. Die Backofentür 1 ist oberseitig über ihre ganze Breite durch einen Aufsatz 9 (auch als Abdeckung oder "Topblende" bezeichnet) abgedeckt, welcher einen Türgriff 10 aufweist.

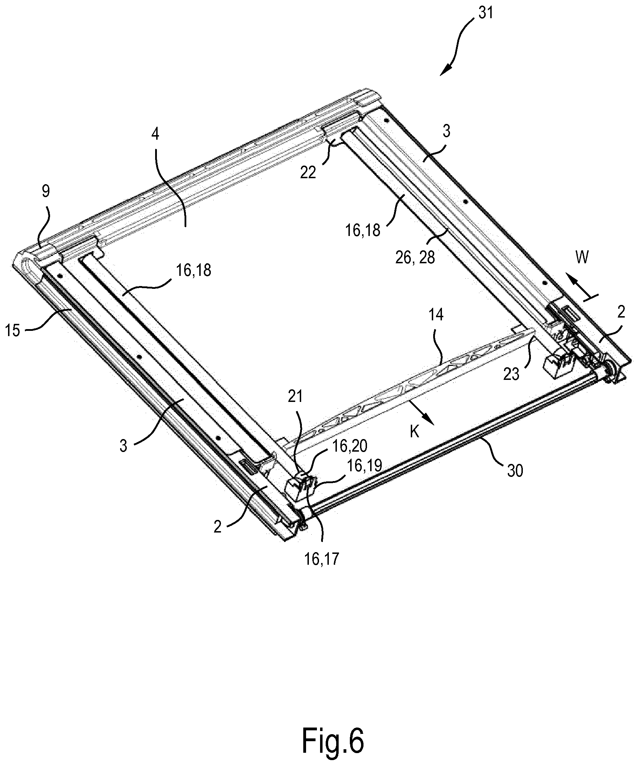

Der Rahmen 3 begrenzt in einer Ansicht von vorne oder hinten zumindest ungefähr einen Bereich ("Warmbereich" W) der Backofentür 1, welcher eine Beschickungsöffnung 11 eines von der Backofentür 1 verschließbaren Aufnahmeraums oder Ofenraums 12 eines Backofens 13 (siehe dazu genauer Fig.6) direkt abdeckt. Die Zwischenscheiben 6, 7 sind zur Wärmeisolierung auf diesen Warmbereich W beschränkt.

Unterhalb des Warmbereichs W befindet sich ein unterer Kaltbereich K, welcher dazu vorgesehen ist, in einem geschlossenen Zustand der Backofentür 1 seitlich, hier: unterhalb, der Beschickungsöffnung 11 angeordnet zu sein. Der Kaltbereich K ist mittels eines Gebläses (o.Abb.) zwangsbelüftbar, so dass er bei eingeschaltetem Gebläse von einem Kühlluftstrom durchströmt wird. Die Zwangsbelüftung kann mittels eines in der Backofentür 1 befindlichen Lüfters (o.Abb.) oder eines in einem Korpus des Backofens 13 angeordneten Lüfters durchgeführt werden.

Der Kaltbereich K ist gegen den Wärmebereich W mittels einer Abtrennung 14 abgetrennt, welche an einem unteren Rand des Rahmens 3 ausgebildet ist und sich über die ganze Breite zwischen den Türprofilen 2 erstreckt.

Die Außenseiten des Türgriffs 10 und der Türprofile 2 bilden an jeder Seite eine längliche Führung 15 zur gleitenden oder rollenden Aufnahme eines Führungselements (o.Abb.), um die Backofentür 1 in einen Korpus des Backofens 13 einschieben zu können.

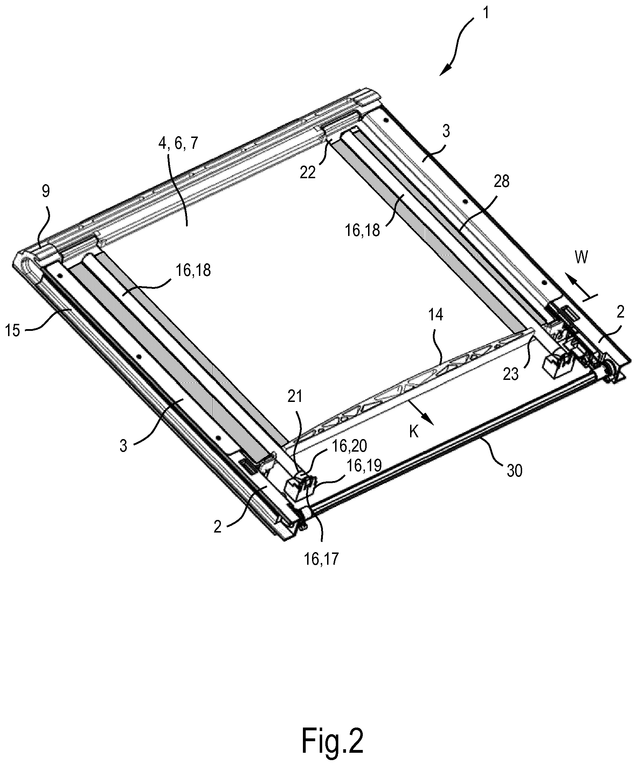

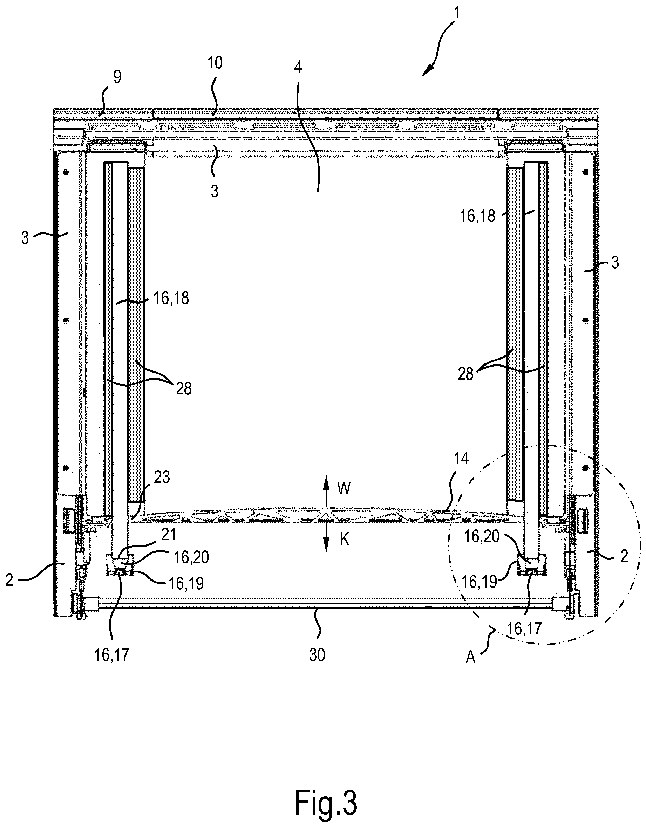

Fig.2 zeigt in einer Schrägansicht eine Rückseite der Backofentür 1 bei abgenommener rückwärtiger Scheibe in einer höheren Genauigkeit. Fig.3 zeigt die Backofentür 1 bei abgenommener rückwärtiger Innenscheibe 8 in einer Rückansicht.

Die Backofentür 1 weist zudem eine Beleuchtungseinrichtung 16 auf, mittels welcher der Ofenraum 12 des Backofens 13 beleuchtbar ist (siehe dazu genauer Fig.6). Die Beleuchtungseinrichtung 16 weist linksseitig und rechtsseitig jeweils eine Lichtquelle in Form einer Leuchtdiode 17 auf, an welche sich jeweils ein stabförmiger Lichtleiter 18 anschließt. Der linksseitige Teil und der rechtsseitige Teil können insbesondere gestaltlich analog (z.B. zu einer Türmittenlinie spiegelsymmetrisch) gleichwirkend ausgestaltet sein.

Die Leuchtdioden 17 befinden sich in dem Kaltbereich K, so dass sie auch bei hohen Temperaturen in dem Ofenraum 12 ausreichend thermisch geschützt sind. Denn die Leuchtdioden 17 sind erstens der aus dem Ofenraum 12 austretenden Wärmestrahlung nicht direkt ausgesetzt und zudem durch die Zwangsbelüftung des Kaltraums K belüftet. Dadurch können die Leuchtdioden 17 auch Temperaturen von 400°C bis 500°C in dem Ofenraum 12 bei einem Pyrolysebetrieb ohne eine signifikante Verringerung ihrer Lebensdauer aushalten.

Die Leuchtdioden 17 sind hier jeweils linksseitig bzw. rechtseitig in einem Teilbereich des unteren Kaltbereichs K angeordnet ist, welcher sich bis zu 100 mm von einer unteren Türkante 30 und bis zu 150 mm von einem nächsten Türprofil 2 erstreckt.

An der zu der Innenscheibe 8 nächsten Scheibe (z.B. der Frontscheibe 4 oder, falls vorhanden, der Zwischenscheibe 6 oder 7) ist auf dieser nächsten Scheibe 4, 6, 7 eine Reflexionslage 28 in Form einer Reflexionsschicht vorhanden. Die Reflexionslage 28 ist beabstandet zu dem Lichtleiter 18 hinter dem Lichtleiter 18 angeordnet und zwar so, dass sich die Reflexionslage 28 über im Wesentlichen die gesamte Länge des Lichtleiters 18 im Warmraum W erstreckt. Die Reflexionslage 28 ist geradlinig und entspricht so der Form des davor angeordneten Lichtleiters 18 und steht seitlich darüber hinaus. Von dem Lichtleiter 18 auf die Reflexionslage 28 abgestrahltes Licht kann mittels der Reflexionslage 28 in den als Aufnahmeraum dienenden Ofenraum 12 reflektiert werden. so dass dieser besser ausleuchtbar ist.

Zur Unterstützung einer gleichmäßigen Ausleuchtung ist die Reflexionslage 28 diffus reflektierend ausgestaltet und weist eine weiße Farbe auf. Die Reflexionslage 28 bzw. die weiße Farbe sind für eine besonders hohe Temperaturbeständigkeit als eine keramische Farbe ausgestaltet. Diese Farbe kann z.B. auf die Scheibe 4, 6, 7 aufgedruckt oder aufgesprüht (z.B. mittels eines Pulversprühverfahrens) worden sein.

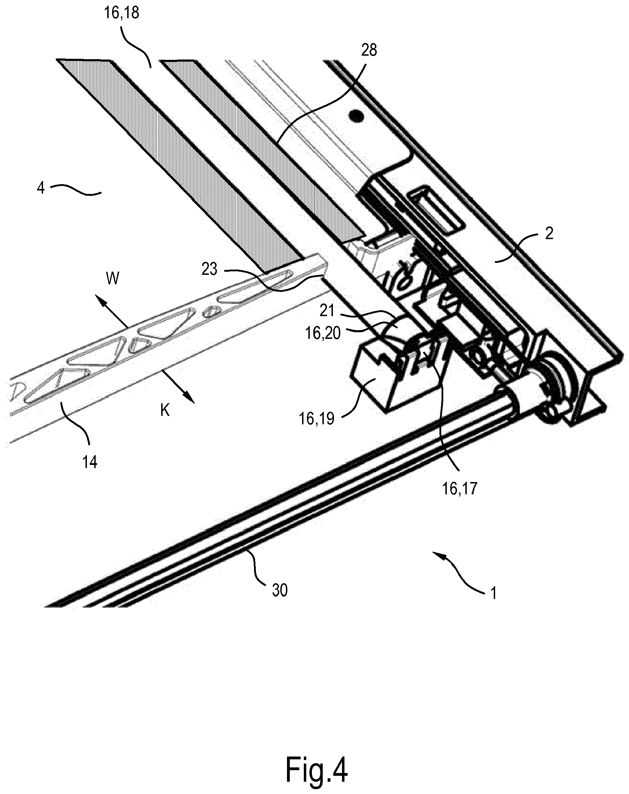

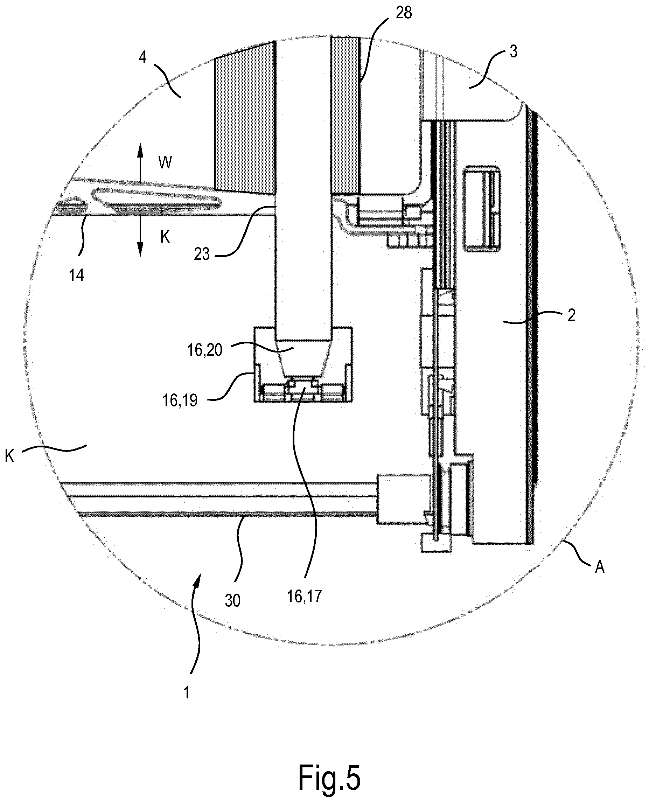

Wie auch ausschnittsweise vergrößert in Fig.4 und Fig.5 (Ausschnitt A) gezeigt, sind die Leuchtdioden 17 auf jeweiligen Trägern 19 befestigt, welche wiederum an der Frontscheibe 4 aufgeklebt sind. Die Träger 19 können auch als Kühlkörper dienen und bestehen dazu bevorzugt aus einem gut wärmeleitfähigen Material, insbesondere mit einer Wärmeleitfähigkeit von mehr als 15 W/(m•K), z.B. Aluminium. Die auch als Kühlkörper dienenden Träger 19 können von dem in dem Kaltbereich K strömenden Kühlluftstrom umströmt werden.

Für eine verbesserte Wärmeabfuhr können die Träger 19 an ihrer Außenseite mindestens eine Kühlstruktur (o.Abb.) aufweisen, z.B. Kühlrippen, Kühlstifte, Kühllamellen usw. Die Kühlstruktur kann einstückig mit dem Träger 19 verbunden sein oder z.B. als dedizierter Kühlkörper mit dem Träger 19 fest verbunden sein, z.B. daran angeschraubt oder angeklemmt oder damit verklebt sein.

Alternativ oder zusätzlich mag eine Wärmeableitung von den Leuchtdioden 17 durch eine thermisch gut leitende Anbindung an die Türprofile 2 erreicht werden, z.B. mittels einer Verbindung der Träger 19 mit einem jeweiligen Türprofil 2.

Für eine gute thermische Verbindung der Leuchtdioden 17 mit ihrem jeweiligen, als Kühlkörper dienenden Träger 19 können die Leuchtdioden beispielsweise an den Träger 19 angeklemmt sein und/oder über ein thermisches Schnittstellenmaterial (TIM; "Thermal Interface Material") an dem Träger befestigt sein.

Den Leuchtdioden 17 ist oberhalb jeweils ein Zwischenstück 20 nachgeordnet und damit optisch nachgeschaltet. Das Zwischenstück 20 dient dazu, von der zugehörigen Leuchtdiode 17 abgestrahltes Licht einzukoppeln und gezielt wieder auszukoppeln. Das Zwischenstück 20 weist dazu einen kegelstumpfförmige Grundform auf und weist an einer der Leuchtdiode 17 zugewandten kleineren unteren Deckfläche eine domartige, z.B. kugelkalottenförmige Aussparung (o.Abb.) auf, welche die Leuchtdiode 17 zumindest im Wesentlichen überwölbt, und zwar auch seitlich. Das Zwischenstück 20 dient also auch als eine Optik oder ein optisches Element, hier: zur Strahlformung.

Da sich das Zwischenstück 20 vollständig im Kaltbereich K befindet, braucht es keine besonderen thermischen Anforderungen erfüllen und mag aus einem thermisch weniger widerstandsfähigen Material bestehen, z.B. aus transparentem Kunststoff. Jedoch ist das Zwischenstück 20 nicht darauf beschränkt und mag z.B. aus Glas, Glaskeramik usw. bestehen. Das Zwischenstück 20 ist ebenfalls am Träger 19 gehaltert.

An einer der Aussparung abgewandten, oberen ebenen Deckfläche 21 des Zwischenstücks 20 schließt sich der Lichtleiter 18 flächig an. Sowohl das Zwischenstück 20 als auch der Lichtleiter 18 leiten Licht mittels innerer Totalreflexion (TIR; "Total Inner Reflection"), sind also als TIR-Körper ausgestaltet. An der kugelkalottenförmigen Aussparung eintretendes Licht wird durch die obere Deckfläche 21 in den Lichtleiter 18 eingestrahlt, falls die Brechungsindizes von Lichtleiter 18 und Zwischenstück 20 ausreichend überein-stimmen, insbesondere bei einem gleichen Material (z.B. Glas). Zur Verbesserung eines Lichtübertrags kann an der oberen Deckfläche 21 mindestens eine optische Über-gangsschicht (o.Abb.) vorgesehen sein.

Die Lichtleiter 18 sind jeweils senkrecht in der Backofentür 1 und parallel zu den Türprofilen 2 angeordnet. Sie reichen von dem Zwischenstück 20 bis zu einem oberen Querstück 22 des Rahmens 3. Der Lichtleiter 18, das Zwischenstück 20 und die Leuchtdiode 17 einer jeweiligen Seite sind zueinander in Reihe oder kollinear angeordnet, was einen hohen fotometrischen Beleuchtungswirkungsgrad ermöglicht. Dazu ist eine Länge des jeweiligen Lichtleiters 18 hier geringer als eine Höhe der Backofentür 1. Die Länge der Lichtleiter 18 ist hier gleich.

Zur Durchführung der Lichtleiter 18 durch die Abtrennung 14 weist die Abtrennung zwei Lichtdurchleitöffnungen 23 auf, durch die sich ein jeweiliger Lichtleiter 18 erstreckt, so dass von den Leuchtdioden 17 erzeugtes Licht in den Lichtleitern 18 durch die Abtrennung 14 geleitet werden kann.

Da sich der Abschnitt der Lichtleiter 18 oberhalb der Abtrennung 14 im Warmbereich W der Backofentür 1 befindet, wird es bevorzugt, dass der Lichtleiter 18 aus einem thermisch widerstandsfähigen Material besteht, welches insbesondere bei einer Pyrolyse austretende Temperaturen im Aufnahmeraum von z.B. 400°C bis 500°C unbeschadet übersteht. Dieses Material ist bevorzugt Glas oder Glaskeramik.

Der Lichtleiter 18 und das Zwischenstück 20 können, z.B. für einen einfacheren Zusammenbau, einstückig ausgebildet sein, z.B. aus Glas. Ein Lichtleiter 18 weist dann insbesondere einen Abschnitt auf, welcher dem Zwischenstück 20 gestaltlich und/oder funktional entspricht, aber in den Lichtleiter 18 integriert ist. Alternativ mag beispielsweise das Zwischenstück aus Kunststoff bestehen (z.B. aus Polycarbonat, PMMA oder Epoxydharz) und der Lichtleiter 18 aus Glas o.ä. Auch mag der Lichtleiter 18 aus Kunststoff bestehen.

Fig.6 zeigt eine Backofentür 31, die sich von der Backofentür 1 dadurch unterscheidet, dass die Reflexionslage 28 nicht auf einer der Scheiben 4, 6, 7 aufgebracht ist, sondern auf einem als Blechelement ausgestalteten Hitzeschild 26. Der Hitzeschild 26 befindet sich zwischen dem Lichtleiter 18 und der nächsten von dem Ofenraum 12 abgewandten Scheibe 4, 6, 7.

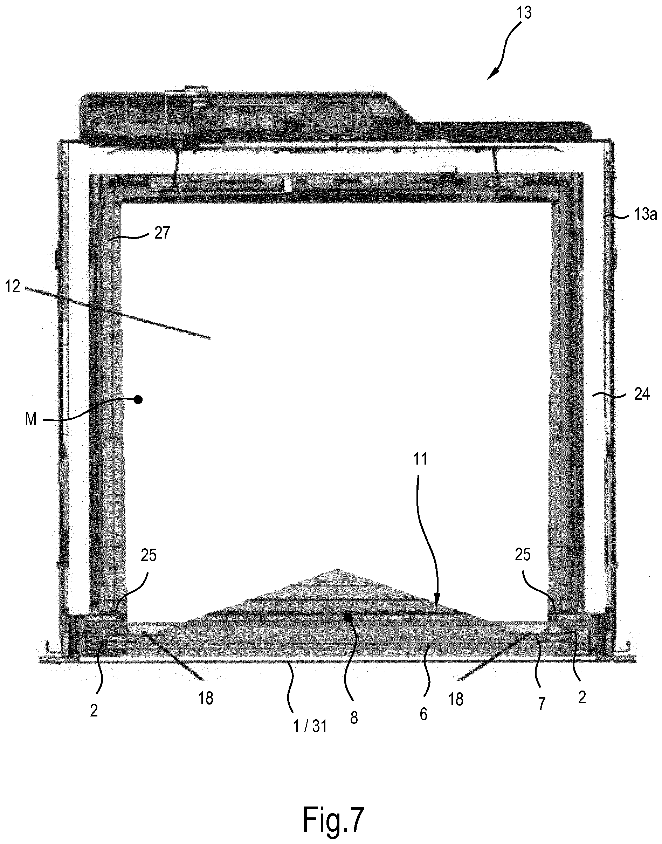

Die Lichtleiter 18 sind dazu angeordnet und eingerichtet, in sie eingekoppeltes Licht durch die Beschickungsöffnung 11 in den Ofenraum 12 einzustrahlen. Fig.7 zeigt in Draufsicht ein mögliches, von den beiden Lichtleitern 18 in den Ofenraum 12 eingestrahltes Licht eines Lichtabstrahlmusters M. Das Lichtabstrahlmuster M kann eine jeweilige Einschubebene fast vollständig, hochgradig gleichmäßig beleuchten. Dadurch, dass sich die Lichtleiter 18 über die gesamte Höhe des Rahmens 3 und damit eines Sichtbereichs der Backofentür 1 erstrecken, können alle Einschubebenen dergestalt ausgeleuchtet werden, und zwar auch dann, wenn der Ofenraum 12 mit Einschubträgern o.ä. belegt ist. Die Lichtleiter 18 weisen den weiteren Vorteil auf, dass sie als eine Wärmebarriere dienen können und so das benachbarte Türprofil 2 gegen Wärme aus dem Ofenraum 12 abschirmen können. Dies kann insbesondere für Türprofile 2 aus Kunststoff vorteilhaft sein.

Der Backofen 13 weist zur Bildung des Ofenraums 12 eine durch die Beschickungsöffnung 11 einseitig offene Muffel 27 als dem Aufnahmeraum auf. Die Muffel 27 ist von einem Gehäuse 13a des Backofens 13 durch eine Wärmeisolierung 24 getrennt. Die Backofentür 1 liegt in ihrem gezeigten geschlossenen Zustand seitlich auf einem die Beschickungsöffnung umlaufend umgebenden Flansch 25 der Muffel 27 auf.

Die beiden Lichtleiter 18 sind so angeordnet, dass sie zumindest abschnittweise in dem Warmbereich W der Backofentür 1 liegen, was eine breitwinklige Lichteinstrahlung in den Ofenraum 12 ermöglicht. Für eine hohe Beleuchtungseffizienz und eine gute thermische Abschirmung der Frontscheibe 4 sind die Lichtleiter 18 hier zwischen der Innenscheibe 8 und der dazu benachbarten Zwischenscheibe 7 abgeordnet, z.B. da dann die Zwischenscheiben 6, 7 ohne eine Beeinflussung der Beleuchtung dick ausgestaltet sein können.

Eine Dicke der hier kreiszylindrischen Lichtleiter 18 beträgt vorzugsweise 5 mm bis 30 mm, ist jedoch nicht darauf beschränkt. Ein Querschnittsprofil der Lichtleiter 18 ist hier zumindest abschnittsweise gekrümmt und kann z.B. kreiszylindrisch, kreissegmentförmig oder oval ausgebildet sein. Für eine breite Lichtabstrahlung ist bevorzugt ein gekrümmter oder eine stärker gekrümmter Bereich einer Mantelfläche 26 des Lichtleiters 18 dem Ofenraum 12 zugewandt.

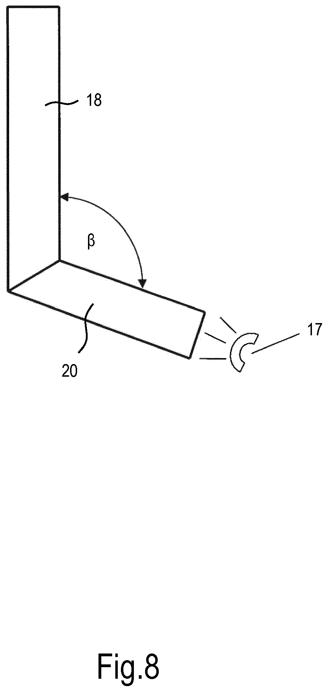

Fig.8 zeigt einen Lichtleiter 18, an dem ein Zwischenstück unter dem Knickwinkel β angewinkelt angrenzt. So kann sich die Beleuchtungseinrichtung 16 im Wesentlichen über die gesamte Höhe der Backofentür 1 erstrecken. Der Knickwinkel β liegt hier zwischen 90° und 180°. Alternativ mag der Lichtleiter unter dem Knickwinkel β angewinkelt sein.

So können die Lichtleiter auch bezüglich ihrer Länge gekrümmt oder angewinkelt sein, d.h., nicht nur gerade ausgestaltet.

Auch mag nur ein Lichtleiter oder mögen mehr als zwei Lichtleiter vorgesehen sein.

### Bezugszeichenliste

- 1: Backofentür
- 2: Türprofil
- 3: Rahmen
- 4: Frontscheibe
- 5: Halterung
- 6: Zwischenscheibe
- 7: Zwischenscheibe
- 8: Innenscheibe
- 9: Aufsatz
- 10: Türgriff
- 11: Beschickungsöffnung
- 12: Ofenraum
- 13: Backofen
- 13a: Gehäuse
- 14: Abtrennung
- 15: Führung
- 16: Beleuchtungseinrichtung
- 17: Leuchtdiode
- 18: Lichtleiter
- 19: Träger
- 20: Zwischenstück
- 21: Deckfläche
- 22: Querstück
- 23: Lichtdurchleitöffnungen
- 24: Wärmeisolierung
- 25: Flansch
- 26: Hitzeschild
- 27: Muffel
- 28: Reflexionsschicht
- 30: Türkante
- 31: Backofentür
- A: Ausschnitt
- K: Kaltbereich
- L: Längsachse
- M: Lichtabstrahlmuster
- W: Warmbereich
- β: Knickwinkel

## Patentansprüche

1. Haushaltsgerätetür (1; 31) zum Verschließen einer Beschickungsöffnung (11) eines Aufnahmeraums (12) eines Haushaltsgeräts (13), wobei
- die Haushaltsgerätetür (1; 31) ein Sichtfenster mit mindestens einer Scheibe (4, 6, 7) aufweist,
- die Haushaltsgerätetür (1; 31) mindestens eine Beleuchtungseinrichtung (16) mit mindestens einer Lichtquelle (17) zum Beleuchten des Aufnahmeraums (12) aufweist,
- die Beleuchtungseinrichtung (16) mindestens einen stabförmigen Lichtleiter (18) aus lichtdurchlässigem Material aufweist, in welchen Licht mindestens einer Lichtquelle (17) einkoppelbar ist und welcher dazu angeordnet und eingerichtet ist, in ihn eingekoppeltes Licht über eine Mantelfläche in den Aufnahmeraum (12) einzustrahlen,
- dem mindestens einen stabförmigen Lichtleiter (18) die mindestens eine Reflexionslage (28) zugeordnet ist, um von diesem Lichtleiter (18) einfallendes Licht in den Aufnahmeraum (12) zu reflektieren,
**dadurch gekennzeichnet, dass**
- die Reflexionslage (28) auf einer Scheibe (4, 6, 7) des Sichtfensters aufgebracht ist,
- diese Scheibe weiter als der mindestens eine Lichtleiter (18) von dem Aufnahmeraum (12) entfernt ist, und
- die Reflexionslage (28) auf einer den Lichtleiter (18) abgewandten Seite der Scheibe (4, 6, 7) angebracht ist.

2. Haushaltsgerätetür (1; 31) nach Anspruch 1, **dadurch gekennzeichnet, dass** der mindestens eine Lichtleiter (18) zwischen einer Innenscheibe (8) und einer dazu benachbarten Scheibe (4, 6, 7) angeordnet ist und die Reflexionslage (28) auf dieser benachbarten Scheibe angeordnet ist.

3. Haushaltsgerätetür (1; 31) nach einem der vorhergehenden Ansprüche, **dadurch gekennzeichnet, dass** sich mindestens eine Reflexionslage (28) über im Wesentlichen die gesamte Länge des Lichtleiters (18) zumindest in einem Sichtbereich der Haushaltsgerätetür (1; 31) erstreckt.

4. Haushaltsgerätetür (31) nach einem der vorhergehenden Ansprüche, **dadurch gekennzeichnet, dass** mindestens eine Reflexionslage (28) auf einem Hitzeschild (26) aufgebracht ist.

5. Haushaltsgerätetür (1; 31) nach einem der vorhergehenden Ansprüche, **dadurch gekennzeichnet, dass** mindestens eine Reflexionslage (28) diffus reflektierend ist.

6. Haushaltsgerätetür (1; 31) nach Anspruch 5, **dadurch gekennzeichnet, dass** mindestens eine Reflexionslage (28) eine weiße oder weißliche Farbe aufweist.

7. Haushaltsgerätetür (1; 31) nach einem der vorhergehenden Ansprüche, **dadurch gekennzeichnet, dass** mindestens eine Reflexionslage (28) keramische Farbe aufweist.

8. Haushaltsgerätetür (1; 31) nach einem der vorhergehenden Ansprüche, **dadurch gekennzeichnet, dass** mindestens eine Reflexionslage (28) aufgedruckt ist.

9. Haushaltsgerätetür (1; 31) nach einem der vorhergehenden Ansprüche, **dadurch gekennzeichnet, dass** mindestens eine Reflexionslage (28) aufgesprüht ist.

10. Haushaltsgerätetür (1; 31) nach einem der vorhergehenden Ansprüche, **dadurch gekennzeichnet, dass** die Haushaltsgerätetür (1) mindestens einen Kaltbereich (K) aufweist, welcher dazu vorgesehen ist, in einem geschlossenen Zustand der Haushaltsgerätetür (1) seitlich, insbesondere unterhalb, der Beschickungsöffnung (11) angeordnet zu sein, und sich die mindestens eine Lichtquelle (17) innerhalb des Kaltbereichs (K) befindet.

11. Haushaltsgerätetür (1; 31) nach einem der vorhergehenden Ansprüche, **dadurch gekennzeichnet, dass** mindestens ein Lichtleiter (18) als ein diffus streuender Lichtleiter ausgestaltet ist.

12. Haushaltsgerätetür (1; 31) nach einem der vorhergehenden Ansprüche, **dadurch gekennzeichnet, dass** die Haushaltsgerätetür (1) eine Gargerätetür, insbesondere Ofentür, ist.

13. Haushaltsgerät (13) mit einer Haushaltsgerätetür (1; 31) nach einem der vorhergehenden Ansprüche und einem durch eine Beschickungsöffnung (11) beschickbaren Aufnahmeraum (12), wobei die Beschickungsöffnung (11) durch die Haushaltsgerätetür (1; 31) verschließbar ist.

## Claims

1. Domestic appliance door (1; 31) for closing a loading opening (11) of a receiving space (12) of a domestic appliance (13), wherein
- the domestic appliance door (1; 31) has a clear-view window with at least one pane (4, 6, 7),
- the domestic appliance door (1; 31) has at least one lighting device (16) with at least one light source (17) for illuminating the receiving space (12),
- the lighting device (16) has at least one rod-shaped light guide (18) made from translucent material, into which light from at least one light source (17) can be fed and which is arranged and designed such that the light fed into it is radiated via a peripheral surface into the receiving space (12),
- the at least one reflective layer (28) is assigned to the at least one rod-shaped light guide (18) in order to reflect incident light from this light guide (18) into the receiving space (12),
**characterised in that**
- the reflective layer (28) is applied to a pane (4, 6, 7) of the clear-view window,
- this pane is further away from the receiving space (12) than the at least one light guide (18) and
- the reflective layer (28) is applied to a side of the pane (4, 6, 7) facing away from the light guide (18).

2. Domestic appliance door (1; 31) according to claim 1, **characterised in that** the at least one light guide (18) is arranged between an inner pane (8) and a pane (4, 6, 7) adjacent thereto and the reflective layer (28) is arranged on this adjacent pane.

3. Domestic appliance door (1; 31) according to one ofthe preceding claims, **characterised in that** at least one reflective layer (28) extends along substantially the entire length of the light guide (18) at least in one visible area ofthe domestic appliance door (1; 31).

4. Domestic appliance door (31) according to one of the preceding claims, **characterised in that** at least one reflective layer (28) is applied to a heat shield (26).

5. Domestic appliance door (1; 31) according to one of the preceding claims, **characterised in that** at least one reflective layer (28) is diffusely reflective.

6. Domestic appliance door (1; 31) according to claim 5, **characterised in that** at least one reflective layer (28) has a white or whitish colour.

7. Domestic appliance door (1; 31) according to one of the preceding claims, **characterised in that** at least one reflective surface (28) has ceramic colour.

8. Domestic appliance door (1; 31) according to one of the preceding claims, **characterised in that** at least one reflective surface (28) is printed on.

9. Domestic appliance door (1; 31) according to one of the preceding claims, **characterised in that** at least one reflective surface (28) is sprayed on.

10. Domestic appliance door (1; 31) according to one of the preceding claims, **characterised in that** the domestic appliance door (1) has at least one cold area (K), which is provided to be arranged to the side of, in particular below the loading opening (11) in a closed state of the domestic appliance door (1), and the at least one light source (17) is located within the cold area (K).

11. Domestic appliance door (1; 31) according to one of the preceding claims, **characterised in that** at least one light guide (18) is designed as a diffusely scattering light guide.

12. Domestic appliance door (1; 31) according to one ofthe preceding claims, **characterised in that** the domestic appliance door (1) is a cooking appliance door, in particular oven door.

13. Domestic appliance (13) with a domestic appliance door (1; 31) according to one of the preceding claims and a receiving space (12) which can be loaded by way of a loading opening (11), wherein the loading opening (11) can be closed by way of the domestic appliance door (1; 31).

## Revendications

1. Porte d'appareil ménager (1 ; 31) servant à obturer une ouverture de chargement (11) d'un espace d'accueil (12) d'un appareil ménager (13), dans laquelle la porte d'appareil ménager (1 ; 31) présente une fenêtre avec au moins une vitre (4, 6, 7),
- la porte d'appareil ménager (1 ; 31) présente au moins un dispositif d'éclairage (16) avec au moins une source de lumière (17) pour l'éclairage de l'espace d'accueil (12),
- le dispositif d'éclairage (16) présente au moins un conduit de lumière (18) en forme de bâton en matériau translucide, dans lequel la lumière d'au moins une source de lumière (17) peut être couplée et qui est disposé et aménagé afin d'injecter la lumière couplée en son sein via une surface de manteau dans l'espace d'accueil (12),
- l'au moins une couche de réflexion (28) est affectée à l'au moins un conduit de lumière (18) en forme de bâton, afin de réfléchir dans l'espace d'accueil (12) la lumière incidente émanant de ce conduit de lumière (18),
**caractérisée en ce que**
- la couche de réflexion (28) est apposée sur une vitre (4, 6, 7) de la fenêtre,
- cette vitre est plus éloignée de l'espace d'accueil (12) que l'au moins un conduit de lumière (18), et
- la couche de réflexion (28) est apposée sur un côté de la vitre (4, 6 ,7) éloigné du conduit de lumière (18).

2. Porte d'appareil ménager (1 ; 31) selon la revendication 1, **caractérisée en ce que** l'au moins un conduit de lumière (18) est disposé entre une vitre intérieure (8) et une vitre voisine (4, 6, 7) et la couche de réflexion (28) est disposée sur cette vitre voisine.

3. Porte d'appareil ménager (1 ; 31) selon l'une des revendications précédentes, **caractérisée en ce qu'**au moins une couche de réflexion (28) s'étend essentiellement sur toute la longueur du conduit de lumière (18) au moins dans une zone de vision de la porte d'appareil ménager (1 ; 31).

4. Porte d'appareil ménager (31) selon l'une des revendications précédentes, **caractérisée en ce qu'**au moins une couche de réflexion (28) est apposée sur un bouclier thermique (26).

5. Porte d'appareil ménager (1 ; 31) selon l'une des revendications précédentes, **caractérisée en ce qu'**au moins une couche de réflexion (28) est diffusément réfléchissante.

6. Porte d'appareil ménager (1 ; 31) selon la revendication 5, **caractérisée en ce qu'**au moins une couche de réflexion (28) présente une couleur blanche ou blanchâtre.

7. Porte d'appareil ménager (1 ; 31) selon l'une des revendications précédentes, **caractérisée en ce qu'**au moins une couche de réflexion (28) présente une couleur céramique.

8. Porte d'appareil ménager (1 ; 31) selon l'une des revendications précédentes, **caractérisée en ce qu'**au moins une couche de réflexion (28) est imprimée.

9. Porte d'appareil ménager (1 ; 31) selon l'une des revendications précédentes, **caractérisée en ce qu'**au moins une couche de réflexion (28) est pulvérisée.

10. Porte d'appareil ménager (1 ; 31) selon l'une des revendications précédentes, **caractérisé en ce que** la porte d'appareil ménager (1) présente au moins une zone froide (K) prévue afin d'être disposée, dans un état fermé de la porte d'appareil ménager (1) sur le côté, en particulier sous l'ouverture de chargement (11) et **en ce que** l'au moins une source de lumière (17) se trouve à l'intérieur de la zone froide (K).

11. Porte d'appareil ménager (1 ; 31) selon l'une des revendications précédentes, **caractérisé en ce qu'**au moins un conduit de lumière (18) est aménagé sous la forme d'un conduit de lumière à dispersion diffuse.

12. Porte d'appareil ménager (1 ; 31) selon l'une des revendications précédentes, **caractérisé en ce que** la porte d'appareil ménager (1) est une porte d'appareil de cuisson, en particulier une porte de four.

13. Appareil ménager (13) avec une porte d'appareil ménager (1 ; 31) selon l'une des revendications précédentes et un espace d'accueil (12) chargeable via une ouverture de chargement (11), dans lequel l'ouverture de chargement (11) peut être obturé par la porte d'appareil ménager (1 ; 31).
